# EUROPÄISCHE PATENTANMELDUNG

(11) **EP 0 818 678 A2**
(43) Veröffentlichungstag der Anmeldung: **14.01.1998**
(21) Anmeldenummer: 97111047.3
(22) Anmeldetag: 02.07.1997
(51) Int. Cl.: G01N 29/24

(54) **Prüfvorrichting und Verfahren zur zerstörungsfreien Werkstoff-prüfung**

(30) Priorität: 11.07.1996 DE 19628028
(71) Anmelder: SIEMENS AKTIENGESELLSCHAFT, 80333 München (DE)
(72) Erfinder: Meier, Rainer, Dipl.-Ing., 91058 Erlangen (DE); Lingenberg, Dieter, Dipl.-Phys., 65933 Frankfurt (DE)

(57) **Zusammenfassung**

Bei der vorliegenden Prüfvorrichtung (2) zur zerstörungsfreien Werkstoffprüfung mit elektrodynamisch erzeugten Ultraschallwellen (22, 24) ist eine Hochfrequenz-Spule (10)mit einer zur Oberfläche (14) des Werkstückes (4) senkrechten Stirnfläche (58) zwischen wenigstens zwei Magneten (6, 8; 30-40) angeordnet. Durch diese Maßnahme ist ein effizientes Erzeugen und Empfangen von Ultraschallwellen gewährleistet.

## Beschreibung

Die Erfindung bezieht sich auf eine Prüfvorrichtung und ein Verfahren zur zerstörungsfreien Werkstoffprüfung mit elektrodynamisch erzeugten Ultraschallwellen.

Die Ultraschallprüfung ist ein Verfahren der zerstörungsfreien Werkstoffprüfung mit Ultraschall zum Auffinden von Rissen, Einschlüssen, Inhomogenitäten und anderen Fehlern. Der Ultraschall wird dabei beispielsweise piezoelektrisch oder elektrodynamisch erzeugt.

Bei der elektrodynamischen Ultraschallerzeugung wird der Ultraschall direkt im Prüfling erzeugt, so daß ein Koppelmedium entfällt. Die Entstehung der Ultraschallschwingungen ist auf die Wechselwirkung von hochfrequenten Wirbelströmen mit einem Magnetfeld zurückzuführen. Die Wirbelströme werden beispielsweise durch eine Hochfrequenz-Spule erzeugt, die in die Nähe der Oberfläche des Werkstückes gebracht wird. Durch ein zugleich wirkendes Magnetfeld entstehen Lorentzkräfte, die die Schallwellen im Werkstück erzeugen. Je nach Orientierung von Magnetfeld und wirbelstromerzeugender Spule zueinander können Longitudinalwellen und beliebig polarisierte Transversalwellen angeregt werden. Bei der Longitudinalwelle sind Ausbreitungs- und Schwingungsrichtung identisch, wo hingegen bei der Transversalwelle die Schwingungsrichtung senkrecht zur Ausbreitungsrichtung ist. Die Transversalwelle wird auch als Schub- oder Scherwelle bezeichnet und breitet sich nur in festen Medien aus.

Liegt die Polarisierungsrichtung in der durch die Werkstückoberflächennormale und Ausbreitungsrichtung des Ultraschalls aufgespannten Ebene, spricht man von vertikal polarisierten Transversalwellen. Liegt die Polarisierungsrichtung hingegen senkrecht zu dieser Ebene, spricht man von horizontal polarisierten Transversalwellen. Horizontal polarisierte Transversalwellen lassen sich für die Anwendung in der Prüfpraxis nur durch elektrodynamische Anregung erzeugen.

Mit der elektrodynamischen Ultraschallerzeugung ist eine Prüfung des Werkstückes bei Temperaturen bis etwa 1000 K möglich.

Aus der Patentschrift DE 42 04 643 ist eine Prüfvorrichtung mit senkrecht orientierten Permanentmagneten bekannt, deren Orientierung schachbrettartig wechselt. Als Orientierung wird dabei die Richtung zwischen Nord- und Südpol des Permanentmagneten definiert. Bei dieser Vorrichtung ist die Hochfrequenz-Spule zwischen einer Oberfläche des Werkstückes und den Permanentmagneten mäanderförmig angeordnet. Diese Prüfvorrichtung ist sehr aufwendig herzustellen, da die Sende- bzw. Empfangsspule in ebener Form sehr dünn gewickelt werden muß. Bei den bisher üblichen Prüffrequenzen von ca. 0,7 MHz kann dies nur mit großem Aufwand erfolgen. Für eine Prüfung von dünnwandigen Komponenten und Rohrleitungen sind allerdings Frequenzen zwischen 1 und 2 MHz üblich. Um dies zu erreichen, müssen Permanentmagnet- und Hochfrequenz-Spulenanordnungen entsprechend der Frequenz verkleinert werden. Die reproduzierbare Herstellung solcher Prüfvorrichtungen wird damit sehr aufwendig.

Aus der Patentschrift EP 0 579 255 ist eine weitere Prüfvorrichtung bekannt, bei der die zur Schallanregung erforderlichen Wirbelströme über ein die Permanentmagnete einschließendes Magnetjoch induziert werden. Der Abstand der beiden Polschuhe des Magnetjochs ist dabei unerwünscht groß. Damit ist diese Prüfvorrichtung bezgl. Schallanregung und Schallempfang in ihrer Effizienz stark abhängig vom zu prüfenden Material, z.B. wurden bei nichtmagnetischen Komponenten bisher keine befriedigenden Ergebnisse erzielt. Aber gerade bei nichtmagnetischen Schweißnähten und Mischnähten ist aufgrund der zu durchschallenden Stengelkristalle die Anwendung horizontal polarisierter Wellen, die praktisch nur elektrodynamisch erzeugbar sind, besonders geeignet.

Der Erfindung liegt somit die Aufgabe zugrunde, eine Prüfvorrichtung zur zerstörungsfreien Werkstoffprüfung anzugeben, die ein effizientes Erzeugen und Empfangen von Ultraschallwellen gewährleistet und dabei kostengünstig herzustellen ist. Außerdem soll ein Verfahren zur zerstörungsfreien Werkstoffprüfung angegeben werden, das ein effizientes Erzeugen und Empfangen von Ultraschallwellen gewährleistet.

Die erstgenannte Aufgabe wird gemäß der Erfindung gelöst durch eine Prüfvorrichtung zur zerstörungsfreien Werkstoffprüfung mit elektrodynamisch erzeugten Ultraschallwellen, wobei eine Hochfrequenz-Spule mit einer zur Oberfläche des Werkstückes senkrechten Stirnfläche zwischen wenigstens zwei Magneten angeordnet ist.
Die zweitgenannte Aufgabe wird gemäß der Erfindung gelöst durch ein Verfahren zur zerstörungsfreien Werkstoffprüfung mit elektrodynamisch erzeugten Ultraschallwellen, wobei eine Hochfrequenz-Spule mit einer zur Oberfläche des Werkstückes senkrechten Stirnfläche zwischen wenigstens zwei Magneten an das Werkstück angekoppelt wird.

Mit dieser Prüfvorrichtung ist ein effizientes Anregen und Empfangen von elektrodynamisch erzeugten Ultraschallwellen sowohl bei ferromagnetischen als auch bei nichtmagnetischen Werkstücken gewährleistet. Die Hochfrequenz-Spule wird über eine dünne Schutzschicht unmittelbar an das zu prüfende Werkstück angekoppelt. Dadurch, daß die Hochfrequenz-Spule zwischen den Magneten angeordnet ist, ergibt sich eine einfache Möglichkeit der Herstellung und Montage der Prüfvorrichtung im Gegensatz zu den aus dem Stand der Technik bekannten Prüfvorrichtungen. Die Magnete und die Hochfrequenz-Spule können somit nebeneinander angeordnet werden, wo hingegen bei den aus dem Stand der Technik bekannten Vorrichtungen eine komplizierte Anordnung der Komponenten übereinander erfolgt. Dadurch werden zusätzlich die Kosten für die Herstellung dieser Vorrichtung erheblich verringert.

Vorzugsweise sind die Koppelflächen der Magnete und der Hochfrequenz-Spule im wesentlichen in einer Ebene angeordnet.

In einer weiteren Ausgestaltung ist ein Spulenkern in der Längsachse der Hochfrequenz-Spule angeordnet. Dieser Spulenkern besteht insbesondere aus einem weichmagnetischen Material. Ein weichmagnetisches Material ist ein leichtmagnetisier- und entmagnetisierbares Ferromagnetika. Bei entsprechender Materialauswahl, beispielsweise für den geeigneten Frequenzbereich der Ultraschallwellen, wird durch die Permeabilität des Spulenkernes eine nennenswerte Signalverstärkung der zu empfangenden transversalen Ultraschallwellen erreicht.

Vorzugsweise ist der Spulenkern als Zylinder oder Quader ausgeführt. Mit diesen beiden Ausgestaltungen des Spulenkerns läßt sich eine einfache Ausführungsform der Prüfvorrichtung realisieren.

In einer weiteren Ausgestaltung ist die Wicklung der Hochfrequenz-Spule dicht auf dem Spulenkern angeordnet. Dadurch daß die Wicklung der Hochfrequenz-Spule definiert auf dem Spulenkern gewickelt werden kann, im Gegensatz zu den aus dem Stand der Technik bekannten Prüfvorrichtungen, wo beispielsweise die Hochfrequenz-Spule mäanderförmig unterhalb der Permanentmagneten angeordnet ist, ergeben sich definierte Spulendaten.

Somit wird die Reproduzierbarkeit der Eigenschaften der Prüfvorrichtung wesentlich verbessert. Die Rückwirkung des Materials des Werkstückes auf die elektrischen Eigenschaften der Prüfvorrichtung werden minimiert. Üblicherweise wird die Hochfrequenz-Spule mit einem Kondensator zu einem Schwingkreis, dessen Resonanzfrequenz in Nähe der Prüffrequenz liegt, ergänzt. Dies bewirkt, daß die resultierende Schaltungsimpedanz in etwa auf den Ohmschen Anteil reduziert und damit die Signalanregung verbessert wird. Bei dieser Ausführung der Hochfrequenz-Spule ist die Schwingkreisabstimmung sehr stabil, wobei die Resonanzfrequenz und auch die Dämpfung durch das Werkstück nur minimal beeinflußt werden.

Insbesondere können die Magnete Permanentmagnete oder Elektromagnete sein.

Weitere vorteilhafte Ausgestaltungen der Erfindung sind in den Unteransprüchen beschrieben.

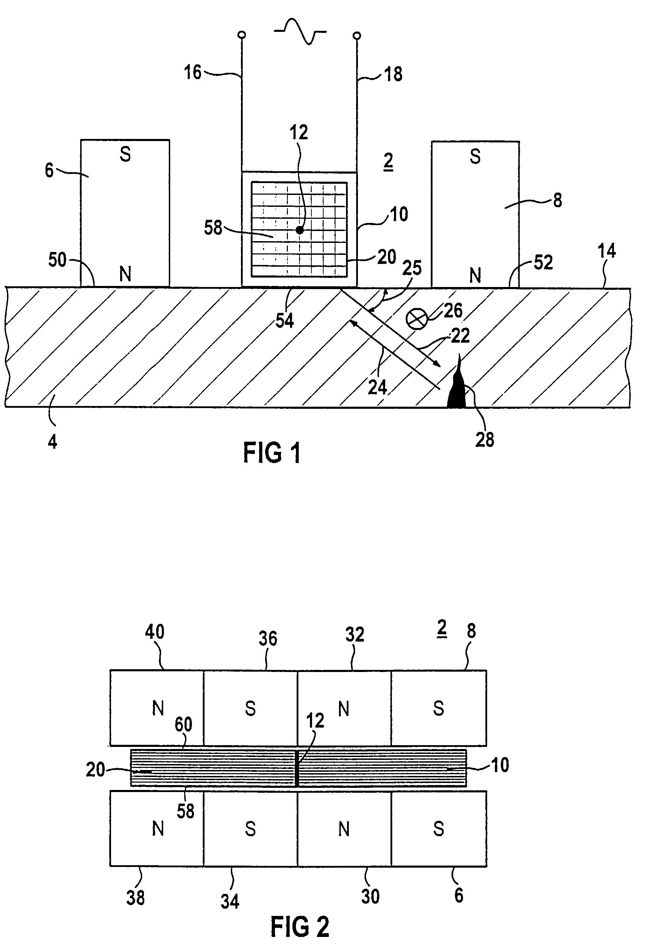

Zur weiteren Erläuterung der Erfindung wird auf die Ausführungsbeispiele der Zeichnung verwiesen, in deren FIG 1 und 2 Ausführungsbeispiele der Erfindung in verschiedener Ansicht schematisch dargestellt sind.

In der Seitenansicht gemäß FIG 1 umfaßt eine Prüfvorrichtung 2 für eine zerstörungsfreie Werkstoffprüfung zwei Permanentmagnete 6 und 8 und eine Hochfrequenz-Spule 10. Die Hochfrequenz-Spule 10 ist dabei mit ihrer Längsachse 12 parallel zu einer Oberfläche 14 eines Werkstückes 4 zwischen den Permanentmagneten 6 und 8 an das Werkstück 4 angekoppelt. Die Koppelflächen 50, 52, 54 der Permanentmagnete 6, 8 und der Hochfrequenz-Spule 10 sind dabei in einer Ebene angeordnet. Die Längsachse 12 ist senkrecht zur Zeichenebene ausgerichtet, so daß eine Stirnfläche 58 (und damit auch eine Querschnittsfläche) der Hochfrequenz-Spule 10 in der Zeichenebene und senkrecht zur Oberfläche 14 des Werkstücks 4 liegt.

Durch diese Prüfvorrichtung 2 ist ein effizientes Anregen und Empfangen von elektrodynamisch erzeugten transversalen Ultraschallwellen 22, 24 gewährleistet. Die Ultraschallwellen 22, 24 breiten sich unter dem Einschallwinkel 25 im Werkstück 4 aus und sind sowohl für die Untersuchung von ferromagnetischen als auch von nichtmagnetischen Werkstücken 4 geeignet.

Die Hochfrequenz-Spule 10 wird über eine nicht weiter dargestellte dünne Schutzschicht mittelbar an das zu prüfende Werkstück 4 angekoppelt. Dadurch, daß die Hochfrequenz-Spule 10 zwischen den beiden Permanentmagneten 6,8 angeordnet ist, ergibt sich eine einfache Möglichkeit der Herstellung und Montage der Prüfvorrichtung 2.

Über die Leitungen 16, 18 wird die Hochfrequenz-Spule 10 mit einem hochfrequenten elektrischen Wechselstrom versorgt.

In der Längsachse 12 der Hochfrequenz-Spule 10 ist ein Spulenkern 20 aus einem weichmagnetischen Material angeordnet. Bei entsprechender Auswahl des Materials, beispielsweise für den geeigneten Frequenzbereich der transversalen Ultraschallwellen 22,24, wird durch die Permeabilität des Spulenkernes 20 eine nennenswerte Signalverstärkung der zu empfangenden Ultraschallwellen 22,24 erreicht. Der Spulenkern 20 hat dabei die Form eines Quaders. Als Spulenkern 20 kann aber auch ein Zylinder verwendet werden.

Dabei wird die Wicklung der Hochfrequenz-Spule 10 dicht auf dem Spulenkern 20 angeordnet. Somit wird die Reproduzierbarkeit der charakteristischen Eigenschaften der Prüfvorrichtung 2 wesentlich verbessert.

Die Auslenkung der Teilchen im Werkstück 4 erfolgt bei den transversalen Ultraschallwellen 22, 24 senkrecht zur Ausbreitungsrichtung und wird durch den Pfeil 26 beschrieben. Die von der Prüfvorrichtung 2 erzeugte Ultraschallwelle 22 wird bei dem dargestellten Impulsechoverfahren an einer Inhomogenität 28 reflektiert. Die reflektierte Ultraschallwelle 24 wird von der zwischenzeitlich vom Ultraschall-Erzeuger zum Ultraschall-Empfänger umgeschalteten Prüfvorrichtung 2 empfangen.

In einer nicht weiter dargestellten Ausführungsform kann die Hochfrequenz-Spule parallel zur Oberfläche 14 um 90° gedreht werden, so daß die Permanentmagnete 6, 8 an den Stirnflächen 58, 60 der Hochfrequenz-Spule 10 angeordnet sind. Durch diese Anordnung wird erreicht, daß die Ausbreitungsrichtung der Ultraschallwellen 22 senkrecht zur Oberfläche 14 ist, d.h. unter dem Einschallwinkel 25 von 90°.

Die Permanentmagnete 6,8 haben eine Orientierung senkrecht zur Oberfläche 14 des Werkstückes 4. Diese können auch als Elektromagnete ausgeführt sein.

FIG 2 zeigt eine weitere Prüfvorrichtung 2 in einer Draufsicht. Im Gegensatz zu FIG 1 sind hier mehrere Permanentmagnete 6,8,30-40 vorgesehen.

Dabei sind die Permanentmagnete 6,30,34,38 und 8,32,36,40 jeweils auf einer Achse senkrecht zu der Längsachse 12 der Hochfrequenz-Spule 10 an der Stirnfläche 58 bzw. 60 hintereinander angeordnet. Die Orientierung der Permanentmagnete 6,8,30-40 ist dabei antiparallel zueinander ausgerichtet. D.h. mit anderen Worten, daß ein magnetischer Südpol einen benachbarten Nordpol hat und umgekehrt.

In einer nicht weiter dargestellten Ausführungsform sind die Orientierungen der Permanentmagnete 6,8,30-40 parallel zueinander ausgerichtet. D.h. mit anderen Worten, daß beispielsweise ein Südpol einen Südpol zum Nachbarn hat.

Mehrere dieser in den FIG 1 und 2 dargestellten Prüfvorrichtungen 2 können in geeigneter Weise zu einem Prüfkopf zusammengesetzt werden. D.h. daß mehrere dieser Prüfvorrichtungen 2 hinter oder nebeneinander angeordnet werden können. Dabei können einzelne Prüfvorrichtungen 2 des Prüfkopfes in geeigneter Weise angesteuert werden um ein vorgegebenes Ultraschallwellenprofil zu erhalten.

## Patentansprüche

1. Prüfvorrichtung (2) zur zerstörungsfreien Werkstoffprüfung mit elektrodynamisch erzeugten Ultraschallwellen (22, 24), wobei eine Hochfrequenz-Spule (10) mit einer zur Oberfläche (14) des Werkstückes (4) senkrechten Stirnfläche (58) zwischen wenigstens zwei Magneten (6, 8; 30-40) angeordnet ist.

2. Prüfvorrichtung (2) nach Anspruch 1,
**dadurch gekennzeichnet**, daß die Koppelflächen (50, 52, 54) der Magnete (6, 8; 30-40) und der Hochfrequenz-Spule (10) im wesentlichen in einer Ebene angeordnet sind, wobei die Orientierungen der Magnete (6, 8; 30-40) senkrecht zur Oberfläche (14) sind.

3. Prüfvorrichtung (2) nach Anspruch 1 oder 2,
**dadurch gekennzeichnet**, daß ein Spulenkern (20) in der Längsachse (12) der Hochfrequenz-Spule (10) angeordnet ist.

4. Prüfvorrichtung (2) nach Anspruch 3,
**dadurch gekennzeichnet,** daß der Spulenkern (20) aus einem weichmagnetischen Material besteht.

5. Prüfvorrichtung (2) nach Anspruch 3 oder 4,
**gekennzeichnet durch** einen Zylinder als Spulenkern (20).

6. Prüfvorrichtung (2) nach Anspruch 3 oder 4,
**gekennzeichnet durch** einen Quader als Spulenkern (20).

7. Prüfvorrichtung (2) nach einem der Ansprüche 3 bis 6,
**dadurch gekennzeichnet**, daß die Wicklung der Hochfrequenz-Spule (10) dicht auf dem Spulenkern (20) angeordnet ist.

8. Prüfvorrichtung (2) nach einem der vorhergehenden Ansprüche, **dadurch gekennzeichnet**, daß die Magnete (6, 8) an den Stirnflächen (58, 60) der Hochfrequenz-Spule (10) angeordnet sind.

9. Prüfvorrichtung (2) nach einem der vorhergehenden Ansprüche, **dadurch gekennzeichnet**, daß die Magnete (6, 8; 30-40) parallel zu den Stirnflächen (58, 60) hintereinander mit abwechselnder Orientierung angeordnet sind.

10. Prüfvorrichtung (2) nach einem der vorhergehenden Ansprüche, **gekennzeichnet durch** Permanentmagnete als Magnete (6, 8; 30-40).

11. Prüfvorrichtung (2) nach einem der Ansprüche 1 bis 10,
**gekennzeichnet durch** Elektromagnete als Magnete (6, 8; 30-40).

12. Verfahren zur zerstörungsfreien Werkstoffprüfung mit elektrodynamisch erzeugten Ultraschallwellen (22, 24), wobei eine Hochfrequenz-Spule (10) mit einer zur Oberfläche (14) des Werkstückes (4) senkrechten Stirnfläche (58) zwischen wenigstens zwei Magneten (6, 8; 30-40) an das Werkstück (4) angekoppelt wird.
